# EUROPEAN PATENT SPECIFICATION

(11) **EP 3 184 672 B1**
(45) Date of publication and mention of the grant of the patent: **24.10.2018**
(21) Application number: 15202341.2
(22) Date of filing: 23.12.2015
(51) Int. Cl.: C25F 3/16, C25D 11/02, F16D 65/02, F16D 65/12

(54) **PROCESS FOR MANUFACTURING A DISC FOR DISC BRAKES**
VERFAHREN ZUR HERSTELLUNG EINER SCHEIBE FÜR BREMSSCHEIBEN
PROCÉDÉ DE FABRICATION D'UN DISQUE POUR DES DISQUES DE FREIN

(43) Date of publication of application: 28.06.2017
(73) Proprietor: Brembo SGL Carbon Ceramic Brakes S.p.A., 24040 Stezzano (BG) (IT)
(72) Inventor: ORLANDI, Marco, STEZZANO (BG) (IT); VILLA, Davide, STEZZANO (BG) (IT)
(74) Representative: Brasca, Marco

(56) References cited:
- WO-A2-2015/040544
- CN-A- 104 499 039
- US-A1- 2010 300 889

## Description

### Field of the art

The present invention relates to fiber reinforced composite materials of the type comprising carbon fibers embedded in a matrix. The invention is related to composite materials with carbon fibers comprising a matrix of different kinds, preferably of ceramic or carbon or polymer. The invention is in particular related to a surface treatment of side braking surfaces of a radially external band of a disc for disc brakes.

### State of the art

Composite materials of the kind above disclosed are used in various technological fields, for example in aerospace, automotive, naval fields, etc.. In all these fields, these composite materials are used to make structural or not structural parts (such as frames, chassis, shells and bodies) which usually have to be joined to other parts of the same (composites) or different materials, such as metal (iron, steel, aluminum alloys, etc.).

In the aerospace and automotive fields in particular, these composite materials are also used to manufacture discs of disc brakes for wheels of cars, motorbikes and planes. A disc brake comprises a bell, configured to be connected to an arm of a vehicle to rotate integral with a wheel rim, and an external band provided with side braking surfaces suitable to cooperate with brake calipers of the vehicle to exert a braking action on the same. Braking bands made of composite material are known. Such bands have to be joined to the bell.

Document EP2484920 discloses methods and apparatus for mechanically joining metal components and composite components.

Document EP2495171 discloses a joint structure for metal member and composite member.

Document DE102009013358A illustrates a brake disc for vehicles. The disc has a friction ring with an opening and a cup that is molded at the friction ring, where the cup is made of aluminum and/or the friction ring is made of ceramic e.g. carbon/silicon carbon composite material.

Document EP1117943 discloses a method for producing brake disks consisting of ceramic parts with metal hubs. At least one ceramic part is placed in a die-casting mould and is joined to melted metals by casting under pressure, in order to obtain a rotationally symmetrical body.

Document US 2010/300889 discloses an activation/etch method for conductive polymer substrates and conductive polymer composite substrates to achieve adhesion to subsequently applied coatings. The method involves anodically polarizing conductive polymers/polymer composites in aqueous etching solutions. Document CN 104 499 039 discloses a recovery method of carbon fibers. The method comprises the following steps: connecting a to-be-recycled carbon fiber composite reinforced material serving as an anode and a conductive material serving as a cathode to a direct current power supply; putting the to-be-recycled carbon fiber composite reinforced material and the cathode conductive material into an electrolyte, so as to form an electrochemical reaction system; and starting the direct current power supply, so that the carbon fiber composite reinforced material serving as the anode is subjected to the electrochemical reaction, so as to obtain the carbon fiber.

Document WO 2015/040544 discloses a braking system of the type provided with a disc and with a brake caliper arranged astride the disc. Braking surfaces of the disc are adapted to cooperate with the brake caliper in order to exert a braking action on a vehicle. The braking system integrates a rotary electrical machine comprising rotor elements mounted on the brake disc and cooperating with stator elements integral with the vehicle.

### Object of the invention

The Applicant observed that joining parts made of carbon fiber reinforced composite materials with other parts, in particular but not exclusively made of metal, without using fasteners (i.e. by bonding or co-casting) is always critical. In an adhesive bonding between a metal member and a composite-material member, material characteristics, such as coefficient of thermal expansion and stiffness, change discontinuously, which causes a situation where stress concentration is likely to occur therein, resulting in de-bonding. Thus, the occurrence and development of the de-bonding between the metal member and the composite-material member lead to fracture of a structure including the adhesive bonding portion between the metal member and the composite-material member.

The Applicant further observed the disc for disc brakes manufactured by co-casting of the prior art, cannot grant performance and safety of the traditional discs made of assembled parts. The Applicant observed that the critical area of the prior art co-cast discs is the interface area between friction disc or discs and the metal bell or drum, i.e. the zones of connection between said friction disc or discs and the metal bell. These areas are critical for the making process, because of the interaction between the metal of the bell and composite friction disc. The Applicant observed that, during cooling of the melted metal, the thermal shrinkage of the same tends to make the bell depart from the originally matching shape of the radially external band. The same areas are also critical during the working life cycle of the brake disc equipping a vehicle. Indeed, the Applicant observed that such areas presents a very high level of local stresses due to the transmission of the braking torque from the radially external band to the bell and then to the vehicle and of thermal stresses due to energy dissipation occurring during braking.

In such context, the Applicant has set the objective of improving reliability and performance of the co-cast composite brakes discs. In particular, one objective is to provide better braking performance of the braking systems.

The Applicant has also set the objective of shortening the brake-in time of the disc brakes.

### Summary of the invention

The Applicant has found that such objectives can be obtained by means of an electrolytic treatment of the surface of the composite material (made of a matrix and carbon fibers). Such electrolytic treatment is preferably anodizing. The Applicant has perceived that the electrolytic treatment used to modify the surfaces of metallic parts is able to react with carbon fibers used in ceramic, plastic or carbon composites. The anodic electrolytic treatment burns the surface fibers and modifies the roughness of the composite surface. In the present description and in the appended claims, a composite material with carbon fibers is meant to be a composite material consisting of a carbon fiber reinforcement embedded in a matrix. The matrix may be of different materials: for example, ceramic, polymer, carbon. The present invention relates to the following and others composite materials with carbon fibers. Carbon fibre-reinforced polymer or plastic (CFRP) is a composite material made of a polymer matrix reinforced with carbon fibers. Carbon fibre-reinforced carbon (CC) is a composite material consisting of a matrix of carbon (amorphous, partially or totally converted to graphite) reinforced by carbon fibre. Carbon fibre-reinforced ceramic or Ceramic Composite Material (CCM) is a composite material consisting of carbon fiber in a matrix of ceramic material. C/SiC (Carbon fibre-reinforced silicon carbide) utilises as ceramic matrix a mix of silicon/silicon carbide. C/SiCs are a development of pure carbon-carbon and can be used in automotive applications, such as components of brake systems on high performance road cars, namely the brake disc and brake pads. More specifically, the present invention relates to a process for manufacturing a disc for disc brakes according to claim 1.

The Applicant verified that the wear/burning of the carbon fibers can be controlled by time and/or electrolytic bath concentration and/or composition and/or electric tension and/or intensity and could be tailored to obtain a controlled and partial consumption of the surface fibers. In this way, the level of final burning of fibers and the final roughness of the composite surface can be adjusted with high precision in order to achieve the requested tolerance and tailored to the specific needs.

The Applicant verified that the improved roughness of the braking surfaces (with no additional coating) intended to come into contact with pads of the caliper allows to shorten the brake-in time of the disc brakes. Indeed, the improved roughness works better to remove material from the pads and to deposit a thin layer of said material onto the braking surfaces.

The present specification also discloses a process for connecting an element of composite material reinforced with carbon fibers to a body, comprising: submitting at least a surface of the element to a treatment process according to the first aspect or to one or more of the following preferred characteristics; joining said surface to said body. The Applicant verified that the improved roughness of the surface to be joined to the body allows to improve also the adhesion between the element and the body and to provide a stronger and safer joint.

Please note that such element and body could be parts of a disc for brake discs (e.g. bell or cup (body) and radially external band (element) as described in the detailed description) or other structural or not structural parts (such as frames, chassis, shells and bodies) used e.g. in aerospace, automotive, naval fields, etc..

The present specification also discloses a process for manufacturing a disc for disc brakes.

The present specification also discloses a disc for disc brakes.

The Applicant verified that the surface treatment of one or more surfaces of the disc during one or several steps of the manufacturing process allows to improve the manufacturing process itself and the quality and performances of the resulting disc and disc brake.

Preferred characteristics are described herein below.

Preferably, the electrolytic treatment is performed by dipping at least in part said element into an electrolytic bath, wherein said element is an anode in said electrolytic treatment. The composite material reinforced with carbon fibers is submitted to an anode electrolytic treatment. Preferably, the electrolytic treatment is decorative anodizing. Preferably, the electrolytic treatment is hard anodizing. Preferably, the electrolytic treatment is electropolishing. Preferably, the electrolytic bath is a solution comprising sulfuric acid H₂SO₄, preferably 96-98%. Preferably, the solution comprises phosphoric acid H₃PO₄. Preferably, a temperature of the electrolytic bath is comprised between about -5°C and about 70°C, preferably between about 0°C and about 25°C more preferably between about 5°C and 15°C. Preferably, a concentration of sulfuric acid in the electrolytic bath is comprised between about 120 - 250 g/l, preferably between about 160 - 200 g/l. Preferably, free Aluminum in the bath is comprised between about 1,0 - 35 g/l, more preferably between about 3,0 - 18 g/l. Preferably, a current intensity in the electrolytic bath is comprised between about 0,5 - 5 A/dm², more preferably between about 1,5 - 2,5 A/dm². Preferably, an applied voltage is comprised between about 10-100 V, more preferably between about 15-20 V. Preferably, the element is dipped into the electrolytic bath for a time comprised between about 300 s and about 7200 s, more preferably between about 2400 s and about 4800 s min. Preferably, before the electrolytic treatment, the process comprises a pre-treatment. Preferably, pre-treatment is performed in respective bath/s. Preferably, pre-treatment comprises: degreasing and/or washing and/or neutralizing and/or electrolytic pre-treatment. Preferably, degreasing is performed in a degreasing bath, more preferably with Anodal Clean BFO. Preferably, the concentration of the degreasing bath is comprised between about 45 - 70 g/l. Preferably, the temperature of the degreasing bath is comprised between about 55°C - 65°C. Preferably, the time of the degreasing bath is comprised between about 480 s - 720 s.

Preferably, electrolytic pre-treatment is performed in an electrolytic pre-treatment bath, more preferably with sodium hydroxide NaOH 30%. Preferably, the concentration of sodium hydroxide in the electrolytic pre-treatment bath is comprised between about 30 - 50 g/l, more preferably between about 5 - 40 g/l. Preferably, the temperature of the electrolytic pre-treatment bath is comprised between about 45°C - 55°C. Preferably, the time of the electrolytic pre-treatment bath is comprised between about 75 s - 200 s.

Preferably, washing is performed in a washing bath, preferably at ambient temperature. Preferably, the time of the washing bath is comprised between about 30 s - 300 s. Preferably, two washings are performed, one after the other, in two subsequent baths.

Preferably, neutralizing is performed in a neutralizing bath. Preferably the neutralizing bath comprises a solution of sulfuric acid H₂SO₄, preferably by dilution of a 96-98% solution. Preferably, the concentration of the sulfuric acid in the neutralizing bath is comprised between about 120 - 200 g/l. Preferably, the temperature of the neutralizing bath is the ambient temperature. Preferably, the time of the neutralizing bath is comprised between about 60 s - 420 s.

Preferably, after the electrolytic treatment, the process comprises a cleaning process. Preferably, cleaning is performed in respective bath/s. Preferably, cleaning comprises: ultrasound washing and/or demineralized-washing and/or ageing. Preferably, ultrasound washing is performed in an ultrasound bath. Preferably, the temperature of the ultrasound bath is the ambient temperature. Preferably, the time of the ultrasound bath is comprised between about 120 s - 360 s.

Preferably, demineralized-washing is performed in an demi bath. Preferably, the temperature of the demi bath is the ambient temperature. Preferably, the time of the demi bath is comprised between about 30 s - 360 s.

Preferably, washing is performed in a washing bath, preferably at ambient temperature. Preferably, the time of the washing bath is comprised between about 30 s - 300 s. Preferably, two washings are performed, one after the other, in two subsequent baths.

Preferably, ageing is performed in an ageing bath. Preferably, the ageing bath is performed in warm demi water. Preferably, the temperature of the ageing bath is comprised between about 65°C - 80°C. Preferably, the time of the ageing bath is comprised between about 300 s - 600 s.

Preferably, the composite material reinforced with carbon fibers comprises a ceramic matrix.

Preferably, the composite material reinforced with carbon fibers comprises a carbon matrix.

Preferably, the composite material reinforced with carbon fibers comprises a plastic matrix.

Preferably, at the end of the electrolytic treatment said surface has a roughness average Ra comprised between about 0,5µm and between about 50µm. Preferably, at the end of the electrolytic treatment said surface has a mean roughness average Raₘₑₐₙ lower than about 10µm and, preferably, a maximum roughness average Raₘₐₓ lower than 14µm.

Preferably, joining is performed by bonding said surface to said body. Preferably, bonding is performed by means of an adhesive. Preferably, said adhesive is a brazing alloy comprises of Ti, Al, Zn, Cu, Sn; preferably that brazing alloy comprises Sn and Zn (90-10% in weight). The Applicant verified that the improved roughness of the surface to be joined to the body allows to improve the adhesion of the adhesive to said surface.

Preferably, joining is performed by co-casting said body to said element. The Applicant verified that the improved roughness of the surface to be joined to the body allows to improve fastening/gripping of the co-cast body onto said surface.

In general, the improved roughness of the surface to be joined to the body allows to improve fastening/gripping of the body onto said surface.

Preferably, if a joining is to be performed, said surface at the end of the electrolytic treatment has a roughness average comprised between about 5µm and about 50µm, more preferably between about 20µm and about 30µm.

The body may be made of the same material or of a different material with respect to the element.

Preferably, the body is made of metal, more preferably of a metal alloy.

Preferably, the body is made of composite material, preferably reinforced with carbon fibers. In this case, also a surface of the body to be joined to the element may be submitted to the treatment process according to the first aspect or to one or more of the preferred characteristics of said treatment process.

Preferably, the manufacturing process comprises: making the radially external band; making a bell; connecting the radially external band to the bell; wherein said at least one surface submitted to the treatment process is a joining surface of the radially external band in contact with the bell and/or a joining surface of the bell in contact with the radially external band. The Applicant verified that roughness of the treated surface/s allows to improve fastening/gripping between the bell and the radial external band, thus improving the performances of the disc brake.

Preferably, connecting the radially external band to the bell comprises: bonding the joining surface of the radially external band to the joining surface of the bell. Preferably, connecting the radially external band to the bell comprises: inserting the radially external band in a mold cavity; introducing a melted metal in the mold cavity to form at least part of a bell co-casted with the external band.

Preferably, the brake system manufacturing process comprises a bedding process comprising: performing several braking by means of braking pads working onto the brake disc surface/s till a bedding layer is created on the brake disc surface/s. Preferably, the several braking are performed increasing the initial speed, disc and pads temperature and torque.

Preferably, the bedding process is performed before applying the brake system to the vehicle by using a dynamic bench or using directly the vehicle with the mounted brake system.

Preferably, the bedding material (which is the material of the pads) comprises: binders (that normally are resins which can be organic or inorganic), abrasives (which may be light or heavy), lubricants, metals (which may be fibers or powders), fillers (everything else that does not belong to families above).

Preferably, if said surface is the braking surface/s of the disc, after the electrolytic treatment and just before the bedding process, it has a roughness average comprised between about 0,5µm and about 9µm, more preferably between about 2µm and about 5µm.

Preferably, in other embodiments the manufacturing process comprises performing an additional coating of the braking surface/s of the radially external band. Preferably said coating is a plasma coating. Preferably said coating comprises oxide and non oxide ceramic materials; preferably said coating comprises alumina and tungsten carbide.

The Applicant verified that the improved roughness of the braking surfaces allows a correct and safe adhesion of the bedding layer or additional coating to the radially external band. The Applicant also verified that the improved roughness of the braking surfaces provides better friction performances (and better braking performance of the braking system) after the bedding process, due to the better friction layer formation on the disc surface.

The Applicant also verified that the treatment process of the invention allows to obtain the requested tolerances of roughness for an optimal adhesion of the bedding layer or additional coating to the radially external band.

Preferably, the radial external band of the disc is carbon fiber-reinforced carbon (CC) composite material or carbon fiber-reinforced silicon carbide (C/SiC) or Ceramic Composite Material (CCM).

Preferably, the radially external band is produced by: mixing raw materials (carbon fiber, thermoset and/or thermoplastic polymer, fillers such as graphite, coke, black carbon, activated carbon, milled carbon fiber, cellulose, silicon, silicon carbide and other carbides such as titanium, boron,); hot molding the carbon fiber reinforced polymer; convert polymer matrix into carbon matrix by pyrolysis treatment and transform carbon matrix into ceramic matrix by infiltration with molten silicon (LSI process).

Preferably, after pyrolysis and infiltration and before the treatment process of the invention, antiox treatment is performed on the radially external band.

Preferably, after antiox treatment and before the treatment process of the invention, final machining is performed on the radially external band.

### Brief description of the drawings

Further characteristics and advantages will be more evident from the detailed description of a preferred but not exclusive embodiment of a disc for disc brakes and of a process for manufacturing said a disc for disc brakes.

Such description will be set forth herein below with reference to the enclosed drawings, provided only for exemplifying and hence non-limiting purposes, in which:
- figure 1 shows a perspective view of a disc for disc brakes according to the present invention;
- figure 2 shows a schematic and sectioned view of the disc of figure 1;
- figure 3 is a plan view of a portion of the disc of figures 1 and 2;
- figure 4A is a Stereo Microscope picture of the anodized disc surface according to the invention after bedding;
- figures 4B and 4C show Stereo Microscope pictures of a prior art disc surface after bedding.

### Detailed description of a preferred embodiment of the invention

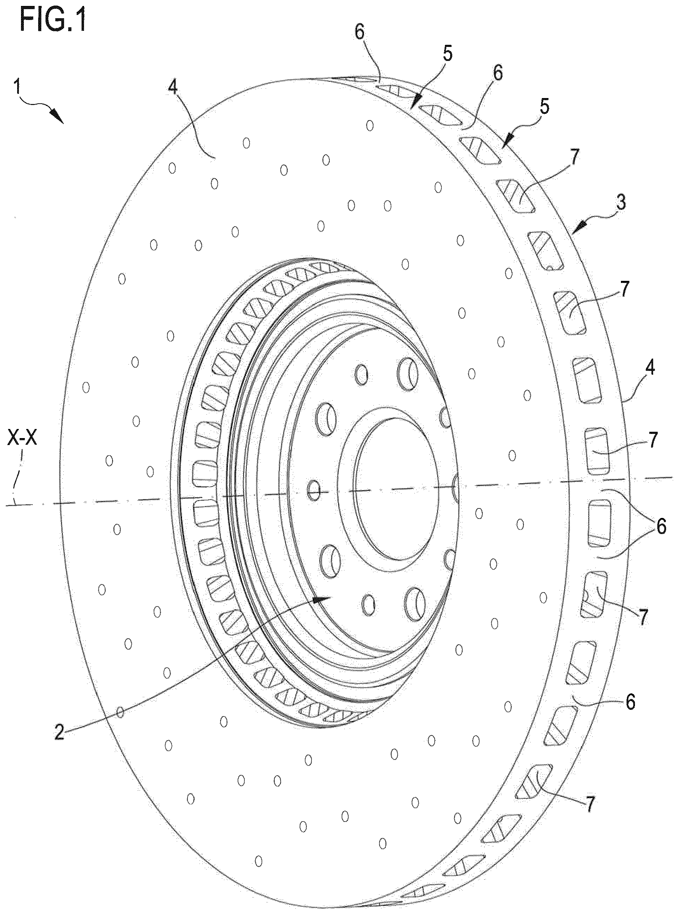

With reference to figure 1, reference number 1 indicates a disc for disc brakes for vehicle wheels in accordance with the present invention.

The disc 1 comprises a bell or cup 2 configured to be connected by bolts to the hub of a vehicle wheel and a radially external band 3 or ring presenting side braking surfaces 4 suitable to cooperate with brake calipers (not shown) to exert a braking action on the vehicle. The radially external band 3 presents a central hole configured to accommodate the bell 2.

The radially external band 3 comprises two opposite annular members 5 which surround the bell 2, are placed axially side by side and are connected to each other by means of spacing walls 6. Said spacing walls 6, together with the annular members 5, delimit inside the radially external band 3 a plurality of cooling channels 7 which extend substantially radially. Each of the annular members 5 carries one of the side braking surfaces 4.

The bell 2 may be made of aluminum alloy and the radially external band 3 is made of carbo-ceramic composite material (CCM), i.e. ceramic material reinforced with carbon fibers. The radially external band 3 is manufactured, according to a process known per-se, by molding a mix of carbon fiber reinforced polymer and then adding, by pyrolysis and infiltration, ceramic material into the carbon fiber reinforced polymer. Before pyrolysis and infiltration, the radial external band 3 is drilled to make ventilation holes. After pyrolysis and infiltration, the braking surfaces 4 of the radial external band 3 is submitted to final machining.

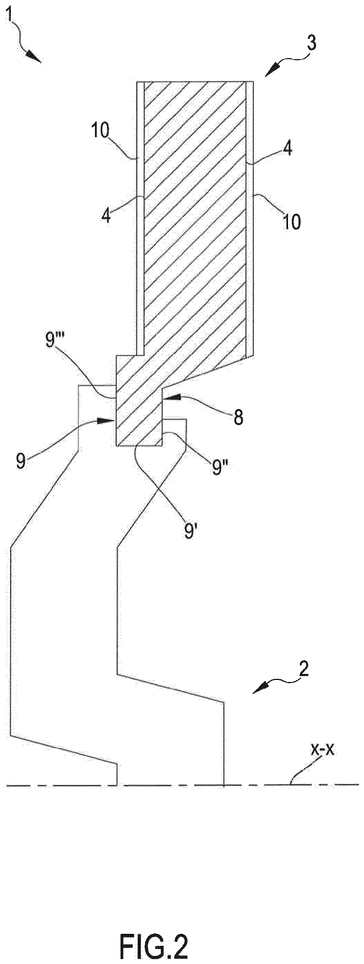

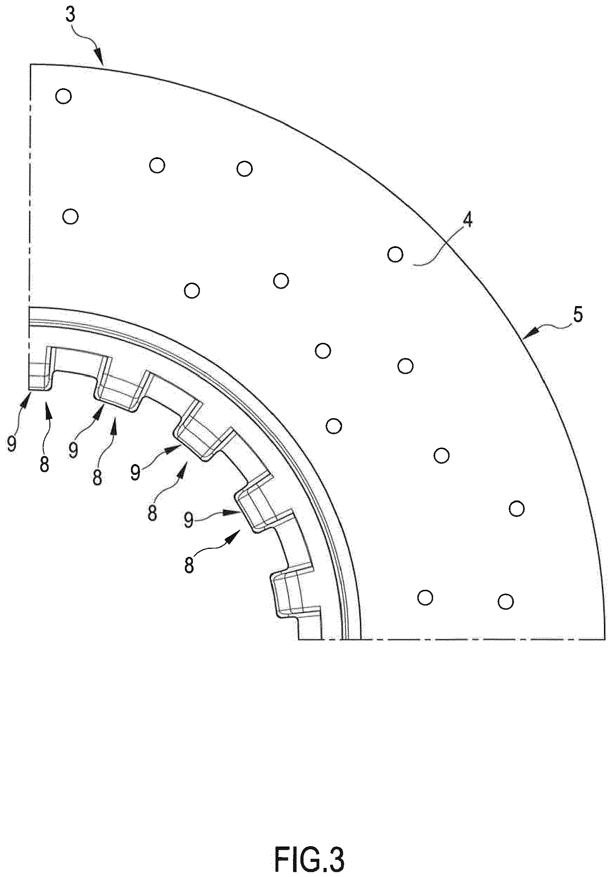

The radially external band 3 is shaped to present a plurality of protrusions 8 jutting out from a radially inner edge of the radially external band 3 towards a symmetry axis "X-X" of the disc 1 (which is the axis of rotation of the disc 1 and the wheel). As shown in figures 2 and 3, each protrusion 8 develops radially towards the symmetry axis "X-X" and presents a joining surface 9 configured to be joined to the bell 2 as explained here below. In the embodiment of the attached figures, said joining surface 9 comprises (figure 2) a radially inner surface 9', a first lateral surface 9" and a second lateral surface 9"', axially opposite to the first 9'. The protrusions 8 delimit a central passage of the radially external band 3. Such protrusions 8 are made in one piece with the overall radially external band 3 during the molding process.

Once that the radially external band 3 with its protrusions 8 is ready, making of the bell 2 is performed by co-casting on said band 3 the aluminum alloy. To this aim, the radially external band 3 is placed in a cavity of a mold (insertion in shell) and melted aluminum is poured in the mold. The cavity of the mold is so shaped that the melted aluminum partly surrounds the protrusions 8 and lies in contact with the joining surface 9.

After solidification of aluminum, the disc 1 with the raw bell 2 is extracted from the mold and sprue removal performed. Then the raw bell 2 is drilled to make holes for the studs of the vehicle hub and for the shaft and machined to define the plane of coupling with the vehicle hub and the axially opposite plane.

Before connecting the bell 2 to said band 3 by co-casting, the joining surface 9 may be prepared to improve the adhesion between the band 3 and the bell 2. To this aim, the joining surface 9 (of composite material reinforced with carbon fibers like the braking surfaces 4) is submitted to an electrolytic treatment to improve its roughness.

Before connecting the bell 2 to said band 3, in particular after pyrolysis and infiltration but before final machining, the braking surfaces 4 may be submitted to electrolytic treatment to improve their roughness.

In a preferred embodiment, the electrolytic treatment may be performed only once over all the radially external band 3 by dipping it in one or more electrolytic baths.

In a preferred embodiment, the electrolytic treatments of the joining surface 9 and of the braking surfaces 4 may be different because different roughness is required. In a preferred embodiment, only the electrolytic treatment of the joining surface 9 is performed.

In a preferred embodiment, only the electrolytic treatment of the braking surfaces 4 is performed.

According to the following example 1, after pyrolysis and infiltration but before final machining, the radially external band 3 is submitted to a pre-treatment according to the succession of steps/baths of the following table 1.

### Example 1

**Table 1**

| **Step** | **Bath** | **Product** | **Temperature** | **Concentration** | **Time** |
|---|---|---|---|---|---|
| 1 | Degreasing | Anodal clean BFO | 60° | 58 g/l | 600s |
| 2 | Sodium hydroxide | NaOH 30% | 52° | 41 g/l | 120s |
| | Free Al | - | - | 20 g/l | |
| 3 | Washing | - | room temp | - | 60s |
| 4 | Washing | - | room temp | - | 60s |
| 5 | Neutralization | H₂SO₄ 96-98% | room temp | 180 g/l | 360s |
| 6 | Washing | - | room temp | - | 120s |
| 7 | Washing | - | room temp | - | 120s |

After pre-treatment, the radially external band 3 is submitted to decorative anodizing according to the following table 2.

**Table 2**

| **Bath** | **Product** | **Voltage** | **Current** | **Temperature** | **Concentration** | **Time** |
|---|---|---|---|---|---|---|
| Anodizing | H₂SO₄ 96-98% | 15 V | 1,5 A/dm₂ | 18° | 180 g/l | 2400s |

After decorative anodizing, the radially external band 3 is submitted to cleaning according to the steps of the following table 3.

**Table 3**

| **Step** | **Bath** | **Product** | **Temperature** | **Concentration** | **Time** |
|---|---|---|---|---|---|
| 1 | Ultrasound washing | - | room temp | - | 240s |
| 2 | Demi washing | - | room temp | - | 300s |
| 3 | Washing | - | room temp | - | 240s |
| 4 | Demi washing | - | room temp | - | 240s |
| 5 | Ageing | - | 75° | - | 420s |

This treatment allows to achieve a roughness average Ra of the braking surfaces 4 of about 5µm. This improved roughness works better to remove material from the pads and to deposit a thin layer of said material onto the braking surfaces during the following bedding process.

Instead of the decorative anodization of Table 2, two other examples of electrolytic treatment is detailed here below in Examples 2 and 3 (Tables 4 and 5).

### Example 2

**Table 4**

| **Bath** | **Product** | **Current** | **Temperature** | **Concentration** | **Time** |
|---|---|---|---|---|---|
| Hard anodizing | H₂SO₄ | 2,8 A/dm₂ | +/-1° | 120 g/l | 2100s |

### Example 3

**Table 5**

| **Bath** | **Product** | **Current** | **Temperature** | **Concentration** | **Time** |
|---|---|---|---|---|---|
| Electropolishing | H₂SO₄ - H₃PO₄ | 4-5 A/dm₂ | 70° | H₂SO₄ 85%-95% H₃PO₄ 2%-5% | 1200s |

Similar anodizing treatments (with appropriate process parameters) could be performed only onto the joining surface 9 in order to achieve a roughness average Ra of said joining surface 9 of about 30µm. This improved roughness of the joining surface allows to improve fastening/gripping of the co-casted bell 2 onto said joining surface 9.

Indeed, the radially external band 3 is then dried in oven and connected to the bell 2 by co-casting as disclosed above.

In different embodiment, the bell 2 is bonded to the radially external band 3 at said joining surface 9 by means of an adhesive, i.e. Sn/Zn 90/10 %w brazing alloy. If the bell 2 is bonded, the bell 2 may be made of the same material (material reinforced with carbon fibers) or of a different material with respect to the radially external band 3.

The brake system manufacturing process is followed by a bedding process which is performed before applying the brake system to the vehicle by using a dynamic bench or using directly the vehicle with the mounted brake system. The bedding process comprises performing several braking by means of braking pads working onto the brake disc surface/s 4 till a bedding layer 10 is created on the brake disc surface/s 4 (see figure 2). The bedding layer 10 comprises the material of the pads which may be Cu, Fe and particles of lubricant like graphite and sulfurs and abrasive materials like silicon carbide and alumina. The several braking are performed increasing the initial speed, disc and pads temperature and torque. At the end of the bedding process said thin bedding layer 10 has a thickness of about 30-150 µm.

In another embodiment, the brake system manufacturing process comprises the deposition of an additional coating onto the braking surfaces 4. The additional coating is deposited after the anodizing treatment to improve its adhesion on the braking surfaces 4. Such an additional coating is i.e. a layer of alumina and tungsten carbide 50/50 %w and is performed through plasma coating. In this case bedding is provided on the additional coating.

### Test

A Ceramic Composite Material (CCM) brake disc treated according to Example 1 (anodized) is submitted to the bedding process and compared to a standard brake disc (not anodized). The bedding process is performed through a dynamic bench test with the typical loads of a Ferrari F137.

Both said disc brakes (anodized CCM and standard CCM) have the following features:

| | |
|---|---|
| Outer diameter of the disc: | 360mm |
| Thickness of the disc: | 32mm |

| | |
|---|---|
| Pads: | TMD 4300 |
| Caliper: | Ferrari F137 - M4 32/36 (4 pistons) |

The bedding process comprises a plurality of braking performed with different start speeds and end speeds, as shown in the following Table 6.

**Table 6**

| | N. of braking | Speeds | Deceleration |
|---|---|---|---|
| Bedding cycle | 4 | From 80 to 30 km/h | 0,3 g |
| | 6 | From 130 to 30 km/h | 0,5 g |
| | 10 | From 130 to 30 km/h | 0,8 g |
| Safety check | 3 | From 150 to 5 km/h | 1,1 g |

The bedding cycle is the real bedding process and the safety check is performed to check if the correct bedding layer 10 is created on the brake disc surface/s.

Test results. The following Table 7 shows the friction coefficients (µ) at the first braking (START), at the end of the cycle (END), at the safety check (SAFETY CHECK) and the minimum friction coefficient (MIN) for each disc (Standard CCM and Anodized CCM).

**Table 7**

| | Invention Anodized CCM | Prior art Standard CCM |
|---|---|---|
| µ START | 0,31 | 0,12 |
| µ MIN | 0,22 | 0,12 |
| µ END | 0,37 | 0,27 |
| µ SAFETY CHECK | 0,35 | 0,28 |

All the friction coefficients (µ) of the anodized CCM disc according to the invention are higher than the corresponding friction coefficients of the standard CCM disc.

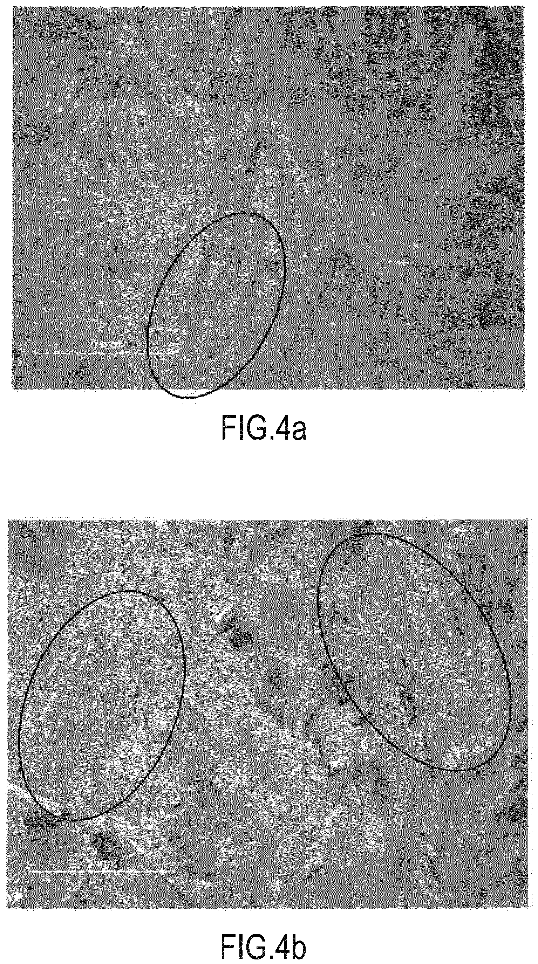

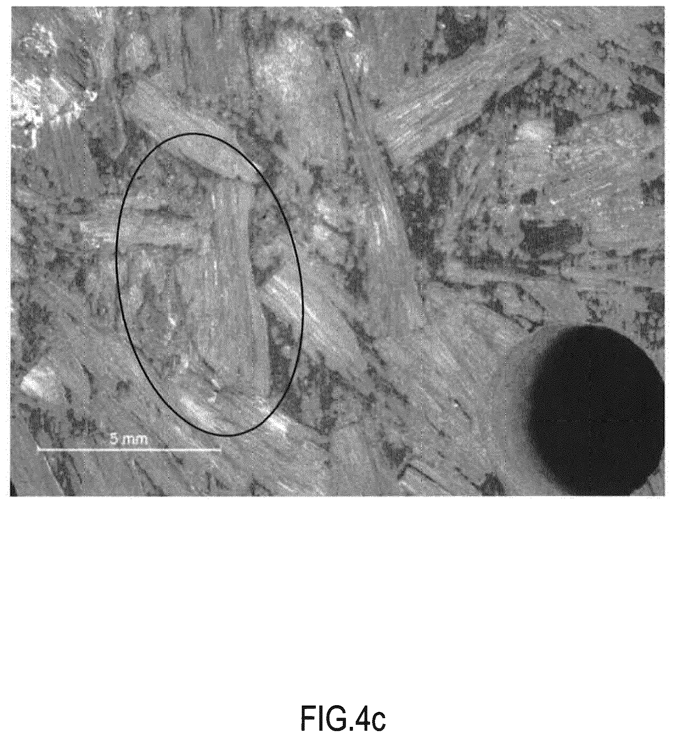

The better friction performance is explained by a better friction layer formation on the disc surface. The attached figures 4A, 4B and 4C showing stereo-microscope pictures clearly show a more uniform friction layer on the surface of the anodized disc (fig.4A - anodized disc surface after bedding) compare to a standard disc (fig 4B and 4C - standard disc surfaces after bedding). Especially on the carbon fiber bundles (surrounded by circles in the figures) the layer deposition is substantially different: transfer layer material (light gray in the circles) is abundantly present on the bundles of the anodized disc, instead of the bundles of the standard discs have less deposit of friction material.

Please note again that, even if the detailed description is referred to connection of parts of a disc brake, the electrolytic treatment is applicable to element (of composite material reinforced with carbon fibers) and body (of the same or different materials) parts (structural or not structural such as frames, chassis, shells and bodies) used in different technical fields, e.g. in aerospace, automotive, naval fields, etc..

## Claims

1. Process for manufacturing a disc for disc brakes, comprising:
submitting at least one surface (4, 9) of a portion (3) of composite material reinforced with carbon fibers to an electrolytic treatment to improve the roughness of said surface (4, 9);
wherein said portion is a radially external band (3) of the disc (1), the radially external band (3) extending around a symmetry axis (X-X) and presenting side braking surfaces (4) suitable to cooperate with brake calipers to exert a braking action on a vehicle;
wherein at least one of, preferably both, the side braking surfaces (4) is submitted to the electrolytic treatment.

2. Manufacturing process according to claim 1, comprising a bedding process comprising: performing several braking by means of braking pads working onto the braking surface/s (4) till a bedding layer (10) is created on the braking surface/s (4).

3. Manufacturing process according to claim 1 or 2, wherein at the end of the electrolytic treatment said surface (4) has a roughness average (Ra) comprised between 0,5µm and 9µm.

4. Manufacturing process according to claim 1, 2 or 3, wherein at the end of the electrolytic treatment said surface (4) has a roughness average (Ra) comprised between 2µm and 5µm.

5. Manufacturing process according to one of claims 1 to 4, wherein the electrolytic treatment is performed by dipping at least in part said portion into an electrolytic bath, wherein said portion is an anode in said electrolytic treatment.

6. Manufacturing process according to one of the preceding claims, wherein the radial external band (3) of the disc is carbon fiber-reinforced carbon (CC) composite material or carbon fiber-reinforced silicon carbide (C/SiC) or Ceramic Composite Material (CCM).

7. Manufacturing process according to one of the preceding claims, wherein the electrolytic bath is a solution comprising sulfuric acid H₂SO₄ and/or phosphoric acid H3PO4.

8. Manufacturing process according to one of the preceding claims, wherein a temperature of the electrolytic bath is comprised between 0°C and 25°C.

9. Manufacturing process according to one of the preceding claims, wherein a concentration of the solution is comprised between 160 g/l and 200 g/l.

10. Manufacturing process according to one of the preceding claims, wherein a current intensity in the electrolytic bath is comprised between 1,5 and 2,5 A/dm².

11. Manufacturing process according to one of the preceding claims, wherein the portion is dipped into the electrolytic bath for a time comprised between 2400 s and 4800 s.

12. Manufacturing process according to one of claims 1 to 11, wherein the radially external band (3) is made by: mixing raw materials; hot molding carbon fiber reinforced polymer; converting polymer matrix into carbon matrix by pyrolysis treatment and transforming carbon matrix into ceramic matrix by infiltration with molten silicon.

## Patentansprüche

1. Verfahren zum Herstellen einer Scheibe für Scheibenbremsen, umfassend:
Aussetzen wenigstens einer Fläche (4, 9) eines Abschnitts (3) aus Verbundmaterial, welches mit Carbonfasern verstärkt ist, einer elektrolytischen Behandlung, um die Rauheit der Oberfläche (4, 9) zu steigern;
wobei der Abschnitt ein radial äußeres Band (3) der Scheibe (1) ist,
wobei sich das radial äußere Band (3) um eine Symmetrieachse (X-X) erstreckt und Seitenbremsflächen (4) aufweist, welches dazu geeignet sind, mit Bremssätteln zusammen zu wirken, um eine Bremswirkung auf ein Fahrzeug auszuüben;
wobei wenigstens eine aus den, vorzugsweise beide,
Seitenbremsflächen (4) der elektrolytischen Behandlung ausgesetzt wird.

2. Herstellungsverfahren nach Anspruch 1, umfassend einen Bettungsprozess, umfassend: Durchführen mehrerer Bremshandlungen mittels Bremsklötzen, welche auf die Bremsfläche/n (4) einwirken, bis eine Bettungsschicht (10) an der Bremsfläche / den Bremsflächen (4) erzeugt wird.

3. Herstellungsverfahren nach Anspruch 1 oder 2, wobei an dem Ende der elektrolytischen Behandlung die Fläche (4) eine Durchschnittsrauheit (Ra) aufweist, welche zwischen 0,5 µm und 9 µm liegt.

4. Herstellungsverfahren nach Anspruch 1, 2 oder 3, wobei an dem Ende der elektrolytischen Behandlung die Fläche (4) eine Durchschnittsrauheit (Ra) aufweist, welche zwischen 2 µm und 5 µm liegt.

5. Herstellungsverfahren nach einem der Ansprüche 1 bis 4, wobei die elektrolytische Behandlung durch wenigstens teilweises Tauchen des Abschnitts in ein elektrolytisches Bad durchgeführt wird, wobei der Abschnitt eine Anode in der elektrolytischen Behandlung ist.

6. Herstellungsverfahren nach einem der vorhergehenden Ansprüche, wobei das radial äußere Band (3) der Scheibe Carbonfaser verstärktes Carbon (CC) oder Carbonfaser verstärktes Siliziumskarbit (C/SiC) oder keramisches Verbundmaterial (CCM) ist.

7. Herstellungsverfahren nach einem der vorhergehenden Ansprüche, wobei das elektrolytische Bad eine Lösung ist, umfassend Schwefelsäure H₂SO₄ und/oder Phosphorsäure H₃PO₄.

8. Herstellungsverfahren nach einem der vorhergehenden Ansprüche, wobei eine Temperatur des elektrolytischen Bads zwischen 0°C und 25°C beträgt.

9. Herstellungsverfahren nach einem der vorhergehenden Ansprüche, wobei eine Konzentration der Lösung zwischen 160 g/L und 200 g/L liegt.

10. Herstellungsverfahren nach einem der vorhergehenden Ansprüche, wobei eine Stromintensität in dem elektrolytischen Bad zwischen 1,5 und 2,5 A/dm² beträgt.

11. Herstellungsverfahren nach einem der vorhergehenden Ansprüche, wobei der Abschnitt in das elektrolytische Bad für eine Zeit getaucht wird, welche zwischen 2400 s und 4800 s beträgt.

12. Herstellungsverfahren nach einem der Ansprüche 1 bis 11, wobei das radial äußere Band (3) hergestellt ist durch: Mischen von Rohrmaterialien; Heißformen von Carbonfaser verstärktem Polymer; Konvertieren einer Polymermatrix in eine Carbonmatrix durch Pyrolyse-Behandlung und Transformieren einer Carbonmatrix in eine keramische Matrix durch Infiltration mit geschmolzenem Silizium.

## Revendications

1. Procédé de fabrication d'un disque pour freins à disque, comprenant :
la soumission d'au moins une surface (4, 9) d'une portion (3) de matériau composite renforcé de fibres de carbone à un traitement électrolytique pour améliorer la rugosité de ladite surface (4, 9) ;
où ladite portion est une bande radialement externe (3) du disque (1), la bande radialement externe (3) s'étendant autour d'un axe de symétrie (X-X) et présentant des surfaces de freinage latérales (4) convenant pour coopérer avec les étriers de frein pour exercer une action de freinage sur un véhicule ;
où au moins l'une, préférablement les deux, surfaces de freinage latérales (4) sont soumises au traitement électrolytique.

2. Procédé de fabrication selon la revendication 1, comprenant un procédé de formation d'une assise comprenant : la réalisation de plusieurs freinages à l'aide de tampons de frein fonctionnant sur la(les) surface(s) de freinage (4) jusqu'à ce qu'une couche d'assise (10) soit créée sur la(les) surface(s) de freinage (4).

3. Procédé de fabrication selon la revendication 1 ou 2, dans lequel à la fin du traitement électrolytique ladite surface (4) présente une moyenne de rugosité (Ra) comprise entre 0,5 µm et 9 µm.

4. Procédé de fabrication selon la revendication 1, 2 ou 3, dans lequel à la fin du traitement électrolytique ladite surface (4) présente une moyenne de rugosité (Ra) comprise entre 2 µm et 5 µm.

5. Procédé de fabrication selon l'une des revendications 1 à 4, dans lequel le traitement électrolytique est effectué en immergeant au moins en partie ladite portion dans un bain électrolytique, où ladite portion est une anode dans ledit traitement électrolytique.

6. Procédé de fabrication selon l'une des revendications précédentes, dans lequel la bande externe radiale (3) du disque est un matériau composite de carbone renforcé de fibres de carbone (CC) ou un carbure de silicium renforcé de fibres de carbone (C/SiC) ou un matériau composite céramique (CCM).

7. Procédé de fabrication selon l'une des revendications précédentes, le bain électrolytique étant une solution comprenant de l'acide sulfurique H₂SO₄ et/ou de l'acide phosphorique H₃PO₄.

8. Procédé de fabrication selon l'une des revendications précédentes, dans lequel une température du bain électrolytique est comprise entre 0°C et 25°C.

9. Procédé de fabrication selon l'une des revendications précédentes, dans lequel une concentration de la solution est comprise entre 160 g/l et 200 g/l.

10. Procédé de fabrication selon l'une des revendications précédentes, dans lequel une intensité de courant dans le bain électrolytique est comprise entre 1,5 et 2,5 A/dm².

11. Procédé de fabrication selon l'une des revendications précédentes, dans lequel la portion est immergée dans le bain électrolytique sur une durée comprise entre 2 400 s et 4 800 s.

12. Procédé de fabrication selon l'une des revendications 1 à 11, la bande radialement externe (3) étant constituée : par mélange des matières premières ; moulage à chaud du polymère renforcé de fibres de carbone ; conversion de la matrice polymère en une matrice de carbone par traitement de pyrolyse et transformation de la matrice de carbone en matrice céramique par infiltration avec du silicium fondu.
